(19) Europäisches Patentamt
European Patent Office
Office européen des brevets

(11) Veröffentlichungsnummer: **0 224 139**
**B1**

(12) # EUROPÄISCHE PATENTSCHRIFT

(45) Veröffentlichungstag der Patentschrift: **24.10.90**

(51) Int. Cl.$^5$: **C 08 F 8/04,** C 08 C 19/02

(21) Anmeldenummer: **86115787.3**

(22) Anmeldetag: **13.11.86**

(54) **Verfahren zur selektiven Hydrierung nitrilgruppenhaltiger ungesättigter Polymerer.**

(30) Priorität: **26.11.85 DE 3541689**

(43) Veröffentlichungstag der Anmeldung:
**03.06.87 Patentblatt 87/23**

(45) Bekanntmachung des Hinweises auf die Patenterteilung:
**24.10.90 Patentblatt 90/43**

(84) Benannte Vertragsstaaten:
**DE FR GB IT**

(56) Entgegenhaltungen:
**EP-A-0 134 023**
**DE-A-3 337 294**
**US-A-3 700 637**

**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Himmler, Thomas, Dr.**
**Bonhoeffer Strasse 20**
**D-5000 Köln 80 (DE)**
Erfinder: **Fiedler, Paul, Dr.**
**Rybniker Strasse 8**
**D-5000 Köln 80 (DE)**
Erfinder: **Braden, Rudolf, Dr.**
**Nothauser Feld 1**
**D-5068 Odenthal (DE)**
Erfinder: **Buding, Hartmuth, Dr.**
**Liebermannstrasse 1**
**D-4047 Dormagen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 224 139 B1

Courier Press, Leamington Spa, England.

**Beschreibung**

Die Erfindung betrifft ein Verfahren zum Hydrieren nitrilgruppenhaltiger ungesättigter Polymerer unter Erhalt der Nitrilgruppen.

Es ist aus US—PS 3 700 637 bekannt, die CC-Doppelbindungen von Dien-(Meth)acrylnitrilcopolymeren mit großem Anteil an alternierenden Dien-Nitril-Einheiten homogen mit Rhodiumhalogenkomplexkatalysatoren in Chlorbenzol zu hydrieren. Die Eignung anderer Metalle wie Platin, Ruthenium, Iridium, Palladium, Rhenium, Kobalt oder Kupfer, homogen oder heterogen, wird angedeutet.

In der DE—OS 2 539 132 wird eine lösungsmittelabhängige selektive Hydrierung von Butadien-Acrylnitrilcopolymeren mit dem vorbekannten Rhodiumkatalysator postuliert, bei der die CN-Dreifach- und cis-Doppelbindungen erhalten bleiben und die vinylischen und trans-Doppelbindungen quantitativ hydriert werden, wenn Chlorbenzol als Lösungsmittel verwendet wird. In anderen Lösungsmitteln, insbesondere Ketonen, werden nur niedrige Hydriergrade erzielt.

Aus der DE—OS 2 459 115 schließlich ist es bekannt, ungesättigte Polyhydroxykohlenwasserstoffe mit Molgewichten bis zu 4000 unter Erhalt der Hydroxylgruppen mit Hilfe von Rutheniumkatalysatoren homogen oder vorzugsweise heterogen zu hydrieren. Als Lösungsmittel für die heterogene Hydrierung kommen aliphatische Kohlenwasserstoffe, aromatische Kohlenwasserstoffe, Alkohole, Ether, Ester und Wasser in Frage; für die homogene Hydrierung werden keine Angaben gemacht. Die Polymeren sollen auch z.B. Acrylnitril als Comonomer enthalten können, detaillierte Beschreibungen werden nicht gemacht, jedoch ist zu berücksichtigen, daß aus US—PS 3 454 644, Beispiel IX, bekannt ist, daß die Nitrilgruppe von Benzonitril in homogener Ru-Katalyse in Ethanol zur Aminogruppe hydriert wird.

Da die Rhodiumverkommen sehr klein sind und Rhodium nicht nur in der chemischen Industrie, sondern überwiegend in der Elektroindustrie, in der Glas- und Keramikindustrie und in jüngster Zeit ganz besonders in der Automobilindustrie (Abgaskatalysator) eingesetzt wird, ist eine Verknappung dieses Edelmetalls in Zukunft nicht auszuschließen.

Aufgabe der vorliegenden Erfindung war es, ein neues rhodiumunabhängiges Verfahren zur selektiven Hydrierung nitrilgruppenhaltiger, ungesättiger Polymerer beliebiger Struktur unter Erhalt der Nitrilgruppen bereit zu stellen, mit dem gewünschtenfalls eine quantitative Hydrierung aller CC-Doppelbindungen erreicht wird und das zu Kautschuken mit hervorragenden Gebrauchseigenschaften führt.

Die DE—OS 33 37 294 betrifft ein Verfahren zur selektiven Hydrierung ethylenisch ungesättigter Verbindungen mit Stickstoff-haltigen Gruppen (z.B. Nitrilgruppen) in Gegenwart eines Rutheniumkomplexes

$$Ru\,X\,L_1(L_2)_2$$

worin X für Chlor, Brom, Jod oder Wasserstoff steht. Mit den erfindungsgemäß zu verwendenden Katalysatoren lassen sich bei der Hydrierung von Nitrilkautschuk höhere Ausbeuten als mit den Katalysatoren gemäß DE—OS 33 37 294 erzielen.

Die Aufgabe wurde durch homogene Reaktionsführung unter Verwendung spezieller Rutheniumkatalysatoren in speziellen Lösungsmitteln in überraschender Weise gelöst.

Gegenstand der Erfindung ist daher die Hydrierung nitrilgruppenhaltiger Polymerer in homogener Phase, unter Erhalt der Nitrilgruppen, dadurch gekennzeichnet, daß als Lösungsmittel ein niedermolekulares Keton und als Katalysator eine Verbindung der Formel

$$RuSnCl_3[(L_1)(L_2)_n]$$

verwendet wird, wobei

$L_1$ gegebenenfalls substituiertes Indenyl der Formel

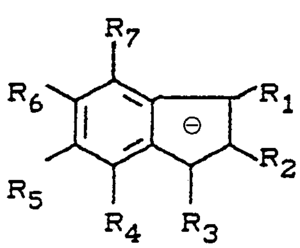

worin $R_1$—$R_7$ gleich oder verschieden sein können und für Wasserstoff, Alkyl-, Cycloalkyl-, Aryl- oder Aralkylreste stehen, wobei auch je zwei benachbarte Reste aus der Gruppe $R^1$ bis $R^7$ gemeinsam ankondensierte Ringsysteme darstellen können, die gegebenenfalls unter Reaktionsbedingungen inerte Substituenten enthalten,

$L_2$ ein Phosphan, Bisphosphan oder Arsan und

n 1 oder 2 bedeuten,

$L_1$ bedeutet vorzugsweise Indenyl oder Fluorenyl und $L_2$ vorzugsweise ein Triarylphosphan. $L_2$-Liganden sind z.B. solche, die den Formeln

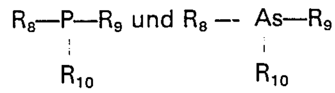

entsprechen, in denen $R_8$, $R_9$ und $R_{10}$ gleich oder verschieden sein können und gegebenenfalls substituierte Alkyl-, Cycloalkyl-, Aryl- oder Aralkylreste bedeuten.

Alkylreste $R_1$—$R_{10}$ sind beispielsweise geradkettige oder verzweigte, gesättigte Kohlenwasserstoffreste mit 1 bis 20, bevorzugt 1 bis 12, besonders bevorzugt 1 bis 6 C-Atomen.

Cycloalkylreste $R_1$—$R_{10}$ sind beispielsweise cyclische, gesättigte Kohlenwasserstoffreste mit 5 bis 12, bevorzugt 5 bis 7 C-Atomen.

Arylreste $R_1$—$R_{10}$ sind beispielsweise aromatische Kohlenwasserstoffreste aus der Benzolreihe mit 6 bis 18, bevorzugt 6 bis 12 C-Atomen.

Aralkylreste $R_1$—$R_{10}$ sind beispielsweise durch Aryl substituierte Alkylreste, die im aliphatischen Teil aus einem geradkettigen oder verzweigten Kohlenwasserstoffrest mit 1 bis 6 C-Atomen und im aromatischen Teil aus einem Rest der Benzolreihe, vorzugsweise Phenyl, bestehen.

Die vorstehend erläuterten Alkyl-, Cycloalkyl-, Aryl- und Aralkylreste können gegebenenfalls durch Hydroxy, $C_1$- bis $C_6$-Alkoxy, $C_1$- bis $C_6$-Carbalkoxy, Fluor oder Chlor substituiert sein, die Cycloalkyl-, Aryl- und Aralkylreste darüber hinaus durch $C_1$- bis $C_6$-Alkyl.

Bevorzugte $L_2$-Liganden sind Triphenylphosphan, Diethylphenylphosphan, Tritolylphosphan, Trinaphthylphosphan, Diphenylmethylphosphan, Tributylphosphan, Tris-(trimethoxyphenyl)-phosphane, Bis-(trimethylphenyl)-phenylphosphane, Bis-(trimethoxyphenyl)-phenylphosphane, Trimethylphenyldiphenylphosphane, Trimethoxyphenyldiphenyl-phosphane, Tris-(dimethylphenyl)-phenylphosphane, Bis-(dimethoxyphenyl)-phenylphosphane, Dimethylphenyldiphenylphosphane, Dimethoxyphenyldiphenylphosphane, Triphenylarsan, Ditolylphenylarsan, Tris-(4-ethoxyphenyl)-arsan, Diphenylcyclohexylarsan, Dibutylphenylarsan und Diethylphenylarsan.

Weitere Beispiele für $L_2$-Liganden sind Bisphosphane der Formel

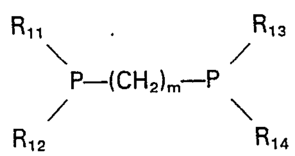

in der m für eine ganze Zahl von 1 bis 10 steht und die Reste $R_{11}$—$R_{14}$ die Bedeutung von $R_1$ haben.

Beispiele für Bisphophane sind 1,2-Bis-diphenylphosphanobutan, 1,2-Bis-dianisylphosphanoethan, bevorzugt 1,3-Bis-diphenylphosphanopropan und insbesondere 1,4-Bis-diphenylphosphanoethan.

Die verwendeten Rutheniumkomplexe sind bekannt (L. A. Oro, M. A. Ciriano, M. Campo, C. Foces-Foces und F. H. Cano, J. Organomet. Chem. *289* (1985) 117—131; DE—OS 33 37 294) und können beispielsweise durch Umsetzung von $RuCl_2(L_2)_3$ mit einem Überschuß des Liganden $L_1$ in Ethanol unter Zusatz von KOH erhalten werden.

Rutheniumkomplexe mit X = Brom oder Jod können z.B. durch einfaches Erhitzen der entsprechenden Rutheniumkomplexe der Formel mit X = Wasserstoff mit HBr oder HI in Methanol gewonnen werden (s. T. Wilczewsky, M. Bochenska, J. F. Biernat in J. Organomet. Chem. *215* (1981), Seiten 87 bis 96).

Als Lösungsmittel für die Hydrierung kommen insbesondere Aceton, Butanon, Pentanone, Cyclopentanon und Cyclohexanon in Frage.

Sowohl die ungesättigten als auch die hydrierten Polymeren sollen im verwendeten Lösungsmittel löslich sein.

Das Verfahren eignet sich zur Hydrierung von Copolymeren aus 85 bis 50 Gew.-%, bevorzugt 82 bis 55 Gew.-% zumindest eines konjugierten Diens, 15 bis 50 Gew.-%, vorzugsweise 18 bis 45 Gew.-% zumindest eines ungesättigten Nitrils und 0 bis 10 Gew.-%, bevorzugt 0 bis 8 Gew.-% zumindest eines weiteren mit konjugierten Dienen und ungesättigten Nitrilen copolymerisierbaren Monomeren.

Als konjugierte Diene kommen z.B. Butadien-1,3, 2-Methylbutadien-1,3, 2,3-Dimethylbutadien-1,3 und Pentadien-1,3, als ungesättigte Nitrile Acrylnitril und Methacrylnitril in Frage.

Als weitere Monomere kommen Vinylaromaten wie Styrol, o-, m- oder p-Methylstyrol, Ethylstyrol, Vinylnaphthalin und Vinylpyridin, α,β-ungesättigte Monocarbonsäuren mit 3 bis 5 C-Atomen wie Acrylsäure, Methacrylsäure und Crotonsäure sowie α,β-ungesättigte Dicarbonsäuren mit 4 bis 5 C-Atomen wie Malein-, Fumar-, Citracon- und Itakonsäure, ferner Vinylchlorid, Vinylidenchlorid, N-Methylolacrylamid und Vinylalkylether mit 1 bis 4 C-Atomen im Alkylteil in Betracht.

Vorzugsweise wird ein binäres Copolymer aus Butadien und Acrylnitril hydriert.

Das Molekulargewicht der Polymeren ist nicht kritisch und liegt zwischen 500 und 500 000 g/mol, bevorzugt zwischen 1000 und 200 000 g/mol und insbesondere zwischen 30 000 und 150 000 g/mol (Zahlenmittel, ermittelt durch Gelpermeationschromatographie).

Die Hydriergrade (Prozentsatz der hydrierten CC-Doppelbindungen bezogen auf die Gesamtzahl der

ursprünglich im Polymer vorhandenen CC-Doppelbindungen) können bis 100% betragen. Die Hydrierung kann jedoch erforderlichenfalls vorher abgebrochen werden. Bevorzugt werden Polymerisate mit Hydriergraden von mindestens 80%, besonders bevorzugt mindestens 90% nach dem erfindungsgemäßen Verfahren hergestellt. Der Hydriergrad wird mittels NMR- und IR-Spektroskopie ermittelt.

Die Konzentration an Katalysator, bezogen auf Polymer (berechnet als Ruthenium), beträgt 10 bis 1000, vorzugsweise 10 bis 600 ppm, besonders bevorzugt 40—500 ppm. Die Konzentration an ungesättigtem Polymer, bezogen auf die Gesamtlösung, beträgt 1 bis 90, vorzugsweise 5 bis 40 Gew.-%.

Die Hydrierung wird zweckmäßigerweise bei 80 bis 200°C, vorzugsweise bei 100 bis 180°C, insbesondere bei 120 bis 160°C und 20 bis 350 bar, vorzugsweise bei 30 bis 250 bar Wasserstoffdruck durchgeführt.

Nach der Hydrierung wird das Polymer mit Hilfe üblicher Methoden aus der Lösung abgetrennt, z.B. durch (Vakuum)-eindampfen, durch Einblasen von Wasserdampf oder durch Zugabe eines Nichtlösungsmittels. Zur Entfernung von Restlösungsmittel oder Wasser schließt sich eine Trocknung an.

Nach einer bevorzugten Ausführungsform führt man das erfindungsgemäße Verfahren bei 80 bis 200°C und 20 bis 350 bar Wasserstoffdruck mit einer Katalysatorkonzentration, berechnet als Ruthenium, bezogen auf Polymer, von 10 bis 1000 ppm durch.

Die erfindungsgemäß hydrierten Polymere werden in üblicher Weise durch eine Peroxid- oder Schwefelvulkanisation gehärtet, sofern die Vulkanisation nicht durch eine Strahlenvernetzung durchgeführt wird.

Aufgrund ihrer ausgezeichneten Wetter-, Ozon-, Öl- und Heißluftbeständigkeit, sowie Beständigkeit gegenüber kaltem Klima können diese Polymeren für hochwertige Gummiartikel, wie Dichtungen, Schläuche, Membranen, für Kabelisolationen und -mäntel eingesetzt werden.

Beispiel 1

Eine sorgfältig mit Stickstoff gespülte Lösung von 160 g eines statistischen Butadien-Acrylnitrilcopolymeren mit 34,9 Gew.-% Acrylnitril und einer Mooney-Viskosität ML 1 + 4 (100°C) von 29 in 1,6 kg Aceton wurde unter Stickstoffspülung in einem 3 l-Autoklaven vorgelegt. Unter weiterer Inertisierung gab man eine ebenfalls mit Stickstoff gespülte Lösung von 350 mg $RuH(PPh_3)_2$ ($\eta^5$-$C_9H_7$) in 55 g Aceton zu und drückte 80 bar Wasserstoff auf.

Man heizte auf 135°C auf und setzte die Reaktion 6 h bei 140 bar Wasserstoffdruck fort. Der Hydriergrad des Polymeren wurde zu 95% bestimmt.

Beispiele 2 bis 5

Entsprechend Beispiel 1 wurden Hydrierungen in Aceton bei 135°C mit 200 bzw. 300 ppm Ruthenium in Form verschiedener Komplexe durchgeführt. Die Ergebnisse zeigt Tabelle 1.

TABELLE 1

| Bsp. | Katalysator | ppm Ru | $P_{H_2}$[bar] | Hydriergrad [%] |
|---|---|---|---|---|
| 2 | $RuCl (PPh_3)_2(\eta^5$-$C_9H_7)$ | 200 | 140 | 90 |
| 3 | $RuCl(dppe)(\eta^5$-$C_9H_7)$ | 300 | 180 | >99 |
| 4 | $Ru(SnCL_3)(PPh_3)_2(\eta^5$-$C_9H_7)$ | 200 | 180 | 98 |
| 5 | $Ru(SnCl_3)(PPh_3)_2(\eta^5$-$C_{13}H_9)$ | 200 | 140 | 92 |

dppe: $Ph_2P(CH_2)_2PPh_2$

**Patentansprüche**

1. Verfahren zur selektiven Hydrierung nitrilgruppenhaltiger ungesättigter Polymerer in homogener Phase unter Erhalt der Nitrilgruppen, dadurch gekennzeichnet, daß als Katalysator eine Verbindung der Formel

$$RuSnCl_3[(L_1)(L_2)_n]$$

wobei

$L_1$ gegebenenfalls substituiertes Indenyl der Formel

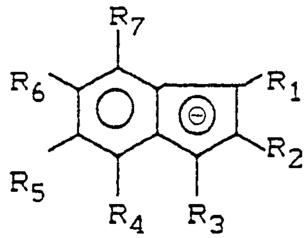

$L_2$ ein Phosphan, Bisphosphan oder Arsan ist,

$R_1$ bis $R_7$ gleich oder verschieden sein können und für Wasserstoff, Alkyl-, Cycloalkyl-, Aryl- oder Aralkylreste stehen, wobei auch je zwei benachbarte Reste aus der Gruppe $R^1$ bis $R^7$ gemeinsam ankondensierte Ringsysteme darstellen können, die gegebenenfalls unter Reaktionsbedingungen inerte Substituenten enthalten,

n 1 oder 2

bedeutet und als Lösungsmittel ein niedermolekulares Keton verwendet wird.

2. Verfahren nach Anspruch 1, dadurch gekennzeichnet, daß $L_1$ Indenyl oder Fluorenyl und $L_2$ ein Triarylphosphan bedeuten.

3. Verfahren nach Anspruch 1, dadurch gekennzeichnet, daß $L_2$ Triphenylphosphan bedeutet.

4. Verfahren nach Anspruch 1 bis 3, dadurch gekennzeichnet, daß Hydriergrade von 80 bis 100% erzielt werden.

5. Verfahren nach Anspruch 1, dadurch gekennzeichnet, daß $L_2$ Bisdiphenylphosphinoethan (dppe) bedeutet.

6. Verfahren nach Anspruch 1 bis 3, dadurch gekennzeichnet, daß man bei 80 bis 200°C und 20 bis 350 bar Wasserstoffdruck mit einer Katalysatorkonzentration, bezogen auf Polymer, berechnet als Ruthenium, von 10 bis 1000 ppm hydriert.

**Revendications**

1. Procédé pour l'hydrogénation sélective de polymères insaturés à groupes nitriles en phase homogène avec conservation des groupes nitriles, caractérisé en ce qu'on utilise comme catalyseur un composé de formule:

$$RuSnCl_3\ [(L_1)(L_2)_n]$$

dans laquelle

$L_1$ est un groupe indényle éventuellement substitué de formule:

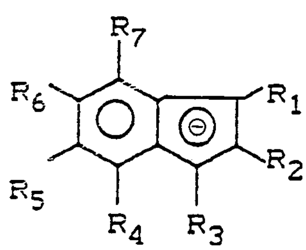

$L_2$ est une phosphine, une bisphosphine ou une arsine,

les restes $R_1$ à $R_7$ peuvent être identiques ou différents et représentent l'hydrogène ou des restes alkyles, cycloalkyles, aryles ou arylalkyles, deux restes voisins de $R_1$ à $R_7$ pouvant aussi chaque fois représenter ensemble des systèmes cycliques condensés, qui contiennent éventuellement des substituants inertes dans les conditions de réaction,

n représente 1 ou 2

et comme solvant une cétone de bas poids moléculaire.

2. Procédé selon la revendication 1, caractérisé en ce que $L_1$ représente un reste indényle ou fluorényle et $L_2$ une triarylphosphine.

3. Procédé selon la revendication 1, caractérisé en ce que $L_2$ représente la triphénylphosphine.

4. Procédé selon les revendications 1 à 3, caractérisé en ce que l'on atteint des degrés d'hydrogénation de 80 à 100%.

5. Procédé selon la revendication 1, caractérisé en ce que $L_2$ représente le bisdiphénylphosphinoéthane (dppe).

6. Procédé selon les revendications 1 à 3, caractérisé en ce que l'on hydrogène à 80—200°C et sous une

pression d'hydrogène de 20 à 350 bar avec une concentration en catalyseur calculée en ruthénium, rapportée au polymère, de 10 à 1 000 ppm.

**Claims**

1. A process for the selective hydrogenation of unsaturated polymers containing nitrile groups in homogeneous phase with the nitrile groups remaining intact, characterized in that a compound corresponding to the formula

$$RuSnCl_3[(L_1)(L_2)]$$

in which

$L_1$ represents optionally substituted indenyl corresponding to the formula

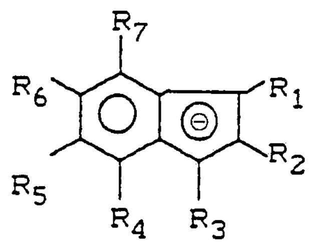

$L_2$ is a phosphane, bisphosphane or arsane,

$R_1$ to $R_7$ may be the same or different and represent hydrogen, alkyl, cycloalkyl, aryl or aralkyl groups and two adjacent substituents from the groups $R_1$ to $R_7$ together may form fused ring systems optionally containing substituents that are inert under reaction conditions,

n is 1 or 2,

is used as catalyst and a low molecular weight ketone is used as solvent.

2. A process as claimed in claim 1, characterized in that $L_1$ is indenyl or fluorenyl and $L_2$ is a triaryl phosphane.

3. A process as claimed in claim 1, characterized in that $L_2$ is triphenyl phosphane.

4. A process as claimed in claims 1 to 3, characterized in that degrees of hydrogenation of 80 to 100% are obtained.

5. A process as claimed in claim 1, characterized in that $L_2$ is bis-diphenylphosphinoethane (dppe).

6. A process as claimed in claims 1 to 3, characterized in that the hydrogenation is carried out at 80 to 200°C and 20 to 350 bar hydrogen pressure using a catalyst concentration, based on polymer, expressed as ruthenium, of 10 to 1,000 ppm.